Europäisches Patentamt

European Patent Office

Office européen des brevets

(11) Veröffentlichungsnummer: **0 360 883**
**A1**

## EUROPÄISCHE PATENTANMELDUNG

(21) Anmeldenummer: **88115827.3**

(22) Anmeldetag: **26.09.88**

(51) Int. Cl.5: **A01N 27/00 , A01N 61/02**

(43) Veröffentlichungstag der Anmeldung:
**04.04.90 Patentblatt 90/14**

(84) Benannte Vertragsstaaten:
**CH DE ES FR GB IT LI**

(71) Anmelder: **ZENTRALEN INSTITUT PO CHIMITSCHESKA PROMISCHLENOST**
**14, Boul. Ho Shi Min**
**Sofia(BG)**

(72) Erfinder: **Georgiev, Georgi Georgiev,**
**Komplex Nadejda-4, Block 456-2,**
**1229 Sofia(BG)**
Erfinder: **Hlebarova, Natalya Borissova,**
**Boul. Ruski 17,**
**1104 Sofia(BG)**
Erfinder: **Dimitrov, Datcho Todorov,**
**Komplex Mladost-1, Block 82-A,**
**1111 Sofia(BG)**
Erfinder: **Dimitrov, Atanas Petrov,**
**Gerlovo-Str. 12,**
**4000 Plovdiv(BG)**

(74) Vertreter: **von Füner, Alexander, Dr. et al**
**Patentanwälte v. Füner, Ebbinghaus, Finck**
**Mariahilfplatz 2 & 3**
**D-8000 München 90(DE)**

(54) **Insektizid zur Bekämpfung von Schädlingen der Gattungen Homoptera und Thysanoptera.**

(57) Das Insektizid zur Bekämpfung von Schädlingen der Gattungen Homoptera und Thysanoptera und insbesondere von Blattläusen und Thripsen enthält 80 bis 95 Gew.-% einer Mischung von Normalparaffinen mit einer Länge der Kohlenstoffkette von $C_{10-20}$, 20 bis 5 Gew.-% oberflächenaktiven Stoffen und gegebenenfalls Lösungsmittel.

Das Insektizid eignet sich zum Spritzen von Tabak, Baumwolle, Zuckerrüben, Kartoffeln, Gemüse, Fruchtkulturen und anderen angegriffenen Kulturen.

Das Insektizid wird als Emulsionskonzentrat nach Emulgieren in Wasser verwendet.

## INSEKTIZID ZUR BEKÄMPFUNG VON SCHÄDLINGEN DER GATTUNGEN HOMOPTERA UND THYSANOPTE-RA

Die Erfindung betrifft ein Insektizid zur Bekämpfung von Schädlingen der Gattungen Homoptera und Thysanoptera und insbesondere von Blattläusen und Thripsen.

Es ist bekannt, daß die chemische Bekämpfung von Blattläusen und Thripsen hauptsächlich mit phosphororganischen und Carbamat-Insektiziden erfolgt, in den letzten Jahren jedoch auch mit synthetischen Pyrethroidmitteln. Zu diesem Zweck werden die Pflanzenschutzmittel in Wasser emulgiert (suspendiert) und die befallenen Pflanzen mit den so erhaltenen Arbeitslösungen gespritzt.

Der Nachteil der bis jetzt verwendeten chemischen Mittel zur Bekämpfung von Blattläusen und Thripsen besteht darin, daß sie toxische Substanzen darstellen, die in größerem oder kleinerem Maße gefährlich für die Gesundheit der Menschen und der Warmblüter sind und weiterhin die behandelte landwirtschaftliche Produktion mit schädlichen Resten verschmutzen.

Die Folgen der Anwendung der gegenwärtigen Insektizide sind negativ auch für die Reinheit des Bodens, der Wasserquellen und der Luft. Zusammen mit den Schädlingen werden auch nützliche Insekten wie Entomophage, Honigbienen, wilde Bestäuber der Pflanzen usw. vernichtet.

Ein wesentlicher Nachteil der synthetischen Pestizide ist, daß sie bei wiederholter Verwendung eine Resistenz bei vielen schädlichen Insektengattungen hervorrufen. Deshalb wird es notwendig,in der Pflanzenschutzpraxis immer neue wirkungsvollere Präparate einzuführen, die in der Regel noch teurer sind und sehr oft auch noch toxischer. So z.B. wird die Resistenz der Pfirsichblattlaus Myzodes persicae gegen phosphororganische Insektizide durch Anwendung des Carbamataphizids Pyrimikarb(2-dimethylamino-5,6-dimethyl-4-pyrimidinyldimethylcarbamat) überwunden, aber in der letzten Zeit zeigt dieses Präparat auch eine verringerte biologische Aktivität. Gegen die hinsichtlich Dimetoat(0,0-dimethyl-S-/N-methylcarbamoylmethyl/-dithiophosphat) und anderen phosphororganischen Substanzen resistenzfähigen Populationen des Tabakthrips Thrips tabaci wird das stark toxische Insektizid Metamidophos (Amido-O,S-dimethylthiophosphat) verwendet. Es gibt auch Versuche mit verschiedenen Typen an Mineralölen zur Bekämpfung der Pfirsichblattlaus, die eine Reihe von gefährlichen Viruskrankheiten der landwirtschaftlichen Kulturen übertragen. Die Ergebnisse aber sind negativ wie im Fall von Kartoffeln (Tag-Ber. Akad. Landwirtsch.-Wiss. DDR, Nr. 121, 1972, S. 33-38) als auch von Paprikaschoten (J. Econ. Entomol., 70, Nr. 3, 1977, S. 309-315) und Tabak (Arch. Phytopathol. u. Pflanzenschutz, Berlin, 12, 1976, Nr. 1, S. 19-26). Mineralöle werden manchmal in Kombination mit phosphororganischen Insektiziden eingesetzt, um eine verlängerte Dauer der Wirkung gegen Blattläuse an Obstbäumen früh im Frühling zu erreichen.

Der Erfindung liegt die Aufgabe zugrunde, ein insektizides Mittel zur Bekämpfung von Schädlingen der Gattungen Homoptera und Thysanoptera und insbesondere von Blattläusen und Thripsen zu entwickeln, das wirkungsvoll auch gegen widerstandsfähige Populationen dieser Insekten und nicht toxisch für Menschen und Warmblüter ist.

Diese Aufgabe wird durch ein Insektizid gelöst, das 80 bis 95 Gew.-% einer Mischung aus Normalparaffinen mit einer Länge der Kohlenstoffkette von $C_{10}$-$C_{20}$, 20 bis 5 Gew.-% oberflächenaktive Stoffe und gegebenenfalls ein Lösungsmittel enthält.

Das Mittel eignet sich zum Spritzen von Tabak, Baumwolle, Zuckerrüben, Kartoffeln, Gemüse, Kern- und Samen-Fruchtkulturen, Beerenfruchtkulturen und anderen befallenen Kulturen.

Es ist festgestellt worden, daß dieses Mittel sehr toxisch gegenüber Blattläusen und Thripsen wirkt. Seine biologische Wirksamkeit entspricht den Erfordernissen der Pflanzenschutzpraxis. Es stellt ein Emulsionskonzentrat dar, das zum Bespritzen von Pflanzen nach Emulgieren in Wasser verwendet wird.

Das erfindungsgemäße Mittel hat eine hohe Wirksamkeit gegenüber schädlichen Insekten, die eine hohe Resistenz gegen alle bekannten Gruppen von synthetischen Insektiziden besitzen. Die Wirksamkeit gegenüber Populationen von Tabakthrips mit hoher Resistenz erreicht bis 95,7 %, und gegenüber der Pfirsichblattlaus (widerstandsfähiger Ursprung) beträgt die Effektivität bis 92,3 %. Sie übertrifft die Parameter des Präparats B-58 (380 g/l Dimetoat), benutzt in seiner Standardkonzentration 150 g/l Wasser.

Die Behandlung mit dem erfindungsgemäßen Mittel verursacht keine phytozidischen Schäden an den Pflanzen. Bei seiner Anwendung wird eine sehr gute toxische Wirkung gegen in der Landwirtschaft eine wichtige Rolle spielende und gegen Pestizide sehr widerstandsfähige Schädlinge festgestellt. Die aktive Substanz des Mittels (Paraffine) ist nicht toxisch für Menschen und Warmblüter. Die mit diesem Mittel behandelte landwirtschaftliche Produktion enthält keine schädlichen Reste, da das Insektizid keine stabilen chemischen Strukturen sowie Schwermetalle aufweist. Es ist biologisch abbaubar. Es kann mit den heutzutage verwendeten Insektiziden, Fungiziden und Akariziden zusammen verwendet werden, ohne jegliche Schäden an den behandelten landwirtschaftlichen Kulturen.

## Beispiel 1

Zusammensetzung des Mittels:

| 1 kg des Mittels enthält | |
|---|---|
| Normalparaffine mit $C_{14}$-$C_{17}$ | 800 g |
| Emulgator AB-31 | 200 g. |

Der Emulgator AB-31 stellt eine Mischung aus ethoxylierten Alkoholen und ethoxyliertem Alkylphenol im Verhältnis 3:1 dar.

Die Komponenten werden während 5 Minuten homogenisiert.

## Beispiel 2

Wirksamkeit des Mittels gegen Tabakthrips an Tabak.

Es werden 400 bzw. 560 g des Mittels auf 100 l Wasser eingewogen und vom Vergleichsmuster B-58 noch 150 g auf 100 l Wasser (Tabelle 1). Man nimmt pro Probe je 5 Blätter des orientalischen Tabaks, die vom Thrips angegriffen sind, und taucht sie für 5 sec in die betreffende Lösung ein, während die Kontrollprobe in reines Wasser getaucht wird. Danach werden mit Hilfe eines stereoskopen Mikroskops die lebenden Individuen auf jedem Blatt gezählt. Nach Behandlung werden die Stiele der behandelten Blätter in Glaskolben mit reinem Wasser getaucht und danach offen an der Luft bei na türlichen Bedingungen gelassen. Nach 3 und 7 Tagen werden die lebenden Thripse auf den behandelten Proben und auf der Kontrollprobe gezählt. Die Wirksamkeit wird nach der Formel von Henderson-Tilton berechnet.

Tabelle 1

| Ergebnisse aus dem Versuch mit Tabakthrips an orientalischem Tabak | | | |
|---|---|---|---|
| Mittel | Dosis, g für 100 l Wasser | Wirksamkeit, % nach Behandlung von | |
| | | 3 Tagen | 7 Tagen |
| 1. Erfindungsgemäßes Mittel | 400 | 86,3 | 92,1 |
| 2. Erfindungsgemäßes Mittel | 560 | 90,6 | 95,7 |
| 3. B-58 | 150 | 68,2 | 61,1 |
| 4. Kontrollprobe, nicht behandelt | | 0 | 0 |

Aus der Tabelle 1 sieht man, daß die Dosis 560 g für 100 l Wasser des erfindungsgemäßen Mittels zu besseren Ergebnissen führt. Am 7. Tag erreicht die Wirksamkeit 95,7 % und übertrifft wesentlich die des Präparats B-58 mit nur 61,1 %. Die Erfahrung zeigt, daß das erfindungsgemäße Mittel einen sehr hohen Prozentsatz der stark widerstandsfähigen Population des Tabakthrips vernichtet.

## Beispiel 3

Prüfung der Wirksamkeit des Mittels gegen Pfirsichblattläuse an orientalischem Tabak.

Es werden 400 g bzw. 560 g des erfindungsgemäßen Mittels auf 100 l Wasser und 150 g der Vergleichsprobe B-58 auf 100 l Wasser eingewogen (Tabelle 2). Für jede Probe werden mit einer Laborspritzvorrichtung je 5 Tabakblätter, die gesondert in Töpfen gepflanzt sind, behandelt. Die Kontrollprobe wird mit reinem Wasser behandelt. Vor der Behandlung werden mit einer Lupe die lebenden Blattläuse (Larven und Erwachsene) auf jeder Pflanze gezählt. Die Pflanzen werden bei natürlichen Bedingungen offen an der Luft gelassen. Nach 3 und 7 Tagen werden die lebenden Individuen auf den behandelten Proben und auf der Kontrollprobe gezählt. Die Wirksamkeit wird nach der Formel von Henderson-Tilton berechnet.

Tabelle 2

| Ergebnisse aus dem Versuch mit Pfirsichblattläusen an orientalischem Tabak | | | |
|---|---|---|---|
| Mittel | Dosis, g. für 100 l Wasser | Wirksamkeit, % nach Behandlung von | |
| | | 3 Tagen | 7 Tagen |
| 1. Erfindungsgemäßes Mittel | 400 | 82,4 | 88,6 |
| 2. Erfindungsgemäßes Mittel | 560 | 89,2 | 92,3 |
| 3. B-58 | 150 | 49,5 | 40,3 |
| 4. Kontrollprobe, nicht behandelt | | 0 | 0 |

Aus der Tabelle 2 ist ersichtlich, daß das erfindungsgemäße Mittel die beste Wirkung am 7. Tag bei einer Dosis von 560 g des Mittels auf 100 l Wasser aufweist. Die Tatsache, daß das Präparat B-58 weniger als 50 % der Blattläuse tötet, zeigt, daß die Population durch eine außerordentlich hohe Resistenz gegenüber Dimetoat und anderen phosphororganischen Insektiziden gekennzeichnet ist. Unter diesen Bedingungen wird die biologische Wirksamkeit des erfindungsgemäßen Mittels , nämlich 92,3 % am 7. Tag nach der Behandlung, als vollkommen befriedigend angesehen.

## Ansprüche

Insektizides Mittel zur Bekämpfung von Schädlingen der Gattungen Homoptera und Thysanoptera, insbesondere von Blattläusen und Thripsen, dadurch **gekennzeichnet,** daß es von 80 bis 95 Gew.-% einer Mischung von Normalparaffinen mit einer Länge der Kohlenstoffkette von $C_{10}$-$C_{20}$, 20 bis 5 Gew.-% von oberflächenaktiven Stoffen und gegebenenfalls noch Lösungsmittel enthält.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.3) |
|---|---|---|---|
| X | D.E.H. FREAR: "Chemistry of Insecticides, Fungicides and Herbicides", 2. Auflage, September 1948, Seiten 189-192, D. Van Nostrand Co., Inc., New York, US * Seiten 189,191-192 * --- | 1 | A 01 N 27/00 A 01 N 61/02 |
| X | E.R. DE ONG: "Chemistry and Uses of Insecticides", 1948, Seiten 112-146, Reinhold, New York, US * Seiten 114-115,127-128,130 * --- | 1 | |
| X | CHEMICAL ABSTRACTS, Band 103, Nr. 19, 11. November 1985, Seite 270, Zusammenfassung Nr. 155786e, Columbus, Ohio, US; O.K. MOUSTAFA et al.: "Enhancement of the efficiency of some insecticides against thrips and cotton leafworm by mineral oils", & J. AGRIC. SCI. 1985, 105(1), 63-6 * Zusammenfassung * --- | 1 | |
| X | FR-A-2 588 722 (A. DEMONT et al.) * Seite 1, Zeilen 18-21; Ansprüche 1,2,7,8 * ----- | 1 | **RECHERCHIERTE SACHGEBIETE (Int. Cl.3)** A 01 N |

Der vorliegende Recherchenbericht wurde für alle Patentansprüche erstellt

| Recherchenort | Abschlußdatum der Recherche | Prüfer |
|---|---|---|
| DEN HAAG | 29-05-1989 | RAVANEL C.M. |